Europäisches Patentamt

European Patent Office

Office européen des brevets

(11) Veröffentlichungsnummer: **0 308 601 B1**

# (12) EUROPÄISCHE PATENTSCHRIFT

(45) Veröffentlichungstag der Patentschrift: **29.01.92**

(21) Anmeldenummer: **88111185.0**

(22) Anmeldetag: **13.07.88**

(51) Int. Cl.⁵: **B60K 11/04**, E06B 9/26, E06B 7/082

(54) **Jalousie.**

(30) Priorität: **23.09.87 DE 3731980**

(43) Veröffentlichungstag der Anmeldung:
**29.03.89 Patentblatt 89/13**

(45) Bekanntmachung des Hinweises auf die
Patenterteilung:
**29.01.92 Patentblatt 92/05**

(84) Benannte Vertragsstaaten:
**AT BE DE ES FR GB IT SE**

(56) Entgegenhaltungen:
**EP-A- 0 179 304**
**EP-A- 0 206 299**
**BE-A- 667 599**
**US-A- 2 280 642**

(73) Patentinhaber: **Firma Carl Freudenberg**
**Höhnerweg 2-4**
**W-6940 Weinheim/Bergstrasse(DE)**

Patentinhaber: **AUDI AG**
**Auto-Union-Strasse 1 Postfach 220**
**W-8070 Ingolstadt(DE)**

(72) Erfinder: **Heinemann, Joachim**
**Gabelsberger 47**
**W-6940 Weinheim(DE)**
Erfinder: **Spies, Karl-Heinz, Dr.**
**Stettiner Strasse 14**
**W-6943 Birkenau(DE)**
Erfinder: **Keller, Frank**
**Bachgasse 36**
**W-6940 Weinheim(DE)**
Erfinder: **Beicht, Bernd**
**Hauptstrasse 15**
**W-6114 Gross-Umstadt(DE)**
Erfinder: **Leitermann, Wulf**
**Kirschenzug 9**
**W-7107 Bad Wimpfen(DE)**
Erfinder: **Lechler, Rolf**
**Stuttgarter Strasse 84**
**W-7107 Neckarsulm(DE)**

# Beschreibung

Die Erfindung betrifft eine Jalousie nach dem Oberbegriff von Anspruch 1. Eine solche Jalousie ist zum Beispiel aus EP-A-0 206 299 bekannt.

Eine weitere, ähnliche Jalousie ist in Verbindung mit dem Kühler eines Kfz. aus der DE-C 34 38 709 bekannt. Neben einem ortsfesten Gitter sind darin zwei relativ bewegliche Schiebegitter vorhanden, welche mit der einströmenden Luft ausgesetzten Gleitflächen relativ beweglich aneinander anliegen. Neben einer gewissen Neigung zur Bildung von Klappergeräuschen wird dabei häufig eine gewisse Schwergängigkeit der Verstellung beanstandet, welche auf die Verschmutzungsneigung der Gleitflächen zurückzuführen ist. Die Betriebssicherheit ist dementsprechend wenig befriedigend.

Der Erfindung liegt die Aufgabe zugrunde, eine Jalousie zum bedarfsweisen Verschließen einer durchströmbaren Öffnung zu zeigen, bei der solche Nachteile nicht mehr auftreten. Die erfindungsgemäße Jalousie soll sich bei einem äußerst robusten Aufbau insbesondere durch eine stark reduzierte Neigung zur Bildung von Klappergeräuschen auszeichnen sowie durch eine weitgehende Unempfindlichkeit gegenüber der Beaufschlagung mit Schmutz. Auch in extremen Situationen soll dadurch stets eine gute Betriebssicherheit gewährleistet sein.

Diese Aufgabe wird erfindungsgemäß bei einer Jalousie der eingangs genannten Art durch die kennzeichnenden Merkmale von Anspruch 1 gelöst. Auf vorteilhafte Ausgestaltungen nehmen die Ansprüche 2 bis 11 bezug.

Bei der erfindungsgemäßen Jalousie sind die sich in der ersten Position zumindest teilweise überdeckenden Gitterstäbe des Stützgitters und des Stellgitters auf ihrer ganzen Länge durch ein in Richtung der Verschiebung in die zweite Position ausfaltbares, im wesentlichen undurchlässiges Flächengebilde verbunden, wobei das Flächengebilde im ausgefalteten Zustand eine Breite aufweist, die wenigstens so groß ist wie die Breite des Abstandes. Die zur Erzielung eines guten Abdichtungsergebnisses in der ersten Position in engem Abstand übereinandergeschobenen Flächen der Gitterstäbe des Stützgitters und des Stellgitters sind in jeder erreichbaren anderen Zuordnungsposition durch das Flächengebilde vor der einströmenden Luft geschützt und damit zugleich vor einer Beaufschlagung mit Schwebstoffen. Diese können sich daher im Bereich der Flächen auch nicht ansammeln, was dazu führt, daß die zur Betätigung erforderlichen Verstellkräfte auch im langfristigen Gebrauch keine nennenswerte Veränderung erfahren. Zudem ist zu berücksichtigen, daß der in der angegebenen, ersten gegenseitigen Zuordnungsposition zwischen dem Stützgitter und dem Stellgitter von den einander teilweise überdeckenden Gitterstäben und dem jeweils zugehörigen Flächengebilde umschlossener Hohlraum in Richtung des Motorraums nicht durchströmbar ist. In einem gegebenenfalls vorhandenen Spalt zwischen den einander in dieser Position teilweise überdeckenden Gitterstäben kann daher ebenfalls eine Strömung nicht zustandekommen, was es entbehrlich macht, besondere Abdichtungsmaßnahmen vorzusehen. Für die Funktionssicherheit und die Leichtigkeit der Verstellung ist das von großem Vorteil. Eine Verwendung im Bereich der Vorderseite eines Kraftfahrzeuges, beispielsweise vor dem Wasserkühler, ist daher problemlos möglich.

Bei der Verschiebung des Stellgitters der erfindungsgemäßen Jalousie aus der ersten Position in die zweite Position werden dessen Gitterstäbe den ursprünglich benachbarten Gitterstäben des Stützgitters angenähert. Dabei ergibt sich zugleich eine Ausfaltung des in der ersten Position eingefalteten Flächengebildes, so daß schließlich die Öffnungen zwischen den benachbarten Gitterstäben vollkommen überdeckt sind. Die in der ersten Position vollkommen geöffneten Durchtrittsöffnungen der Jalousie sind dadurch in der zweiten Position vollkommen geschlossen. Zwischenpositionen jeder beliebigen Größe sind ohne weiteres erreichbar und lediglich eine Frage der verwendeten Steuerungseinrichtung.

Das zur Anwendung gelangende Flächengebilde sollte zumindest in Richtung seiner sich parallel zu den Gitterstäben erstreckenden Länge ausgesteift sein. Es ist zweckmäßig zusätzlich mit sich in Richtung seiner Breite erstreckenden Versteifungszonen versehen, wobei diese zur Ermöglichung der Aus- bzw. Einfaltbewegung durch Gelenke verbunden sind. Flatterbewegungen lassen sich auf diese Weise zuverlässig vermeiden. Des weiteren können die Versteifungszonen die ganze Breite des Flächengebildes einnehmen, wobei nur ein einziges Gelenk in der Mitte und jeweils ein weiteres Gelenk in der unmittelbaren Nähe der Gitterstäbe vorgesehen sind. Im Profil weist ein derartig ausgebildetes Flächengebilde dann zumindest in der ersten Position und zweckmäßig auch in der zweiten Position eine dreieckige Gestalt auf, die sich in statischer Hinsicht durch eine besondere Formstabilität und Steifigkeit auszeichnet.

Das Flächengebilde kann einteilig aus polymerem Werkstoff bestehen, wobei es sich als vorteilhaft erwiesen hat, wenn die Gelenke als Filmscharniere ausgebildet sind. Sie zeichnen sich in diesem Falle durch völlige Pflegefreiheit, Langlebigkeit und Dichtigkeit aus. Die Herstellung ist besonders einfach.

Bei einer Verwendung als Kühlerjalousie kann das Flächengebilde auf der von der anströmenden Luft abgewandten Seite mit einem wärmedämmenden Material beschichtet sein, beispielsweise mit einem Schaum- oder Faserstoff. Falls dieser seine offenporige Oberfläche aufweist, ergibt sich dabei neben einer verkürzten Aufheizzeit des kalten Motors eine Dämpfung der von diesem ausgehenden Schallwellen.

In Hinblick auf die Erzielung einer besonders guten Verschmutzungssicherheit und Luftdurchlässigkeit der geöffneten Jalousie hat es sich als vorteilhaft erwiesen, wenn das Flächengebilde und die Gitterstäbe eine in der ersten Position gleichmäßig ineinander übergehende Außenkontur haben. Diese kann in der ersten Position derjenigen der bekannten Tragflügel von Flugzeugen angenähert sein, was es unter Ausnutzung der von dort her bekannten Effekte gestattet, die unbetätigte Jalousie unter Ausnutzung der Wirkung der anströmenden Luft in Offenstellung zu bringen. Auch begünstigt es eine entsprechende Außenkontur, die einander zugewandten Flächen benachbarter Flächengebilde und Gitterstäbe in der zweiten Position in einen dichtenden Berührungskontakt zu bringen.

Nach einer anderen Ausgestaltung ist es vorgesehen, daß das Stützgitter oder Stellgitter mit sich in Richtung der Verschiebung erstreckenden Führungsleisten versehen ist und daß die Führungsleisten der seitlichen Begrenzung des Flächengebildes dicht benachbart sind. Sowohl in mechanischer als auch in strömungstechnischer Hinsicht ist die Verwendung entsprechender Führungsleisten von großem Vorteil. Auch lassen sich hierdurch Gleitbahnen der Gitter vor der anströmenden Luft und damit vor der Anlagerung von Schwebstoffen schützen, welche seitlich von dem Flächengebilde und den Gitterstäben angeordnet sind.

Entsprechend ausgebildete Führungsleisten sollen senkrecht zur Richtung des Stützgitters eine Erstreckung haben, die wenigstens so groß ist wie die maximale Erstreckung des Flächengebildes in gleicher Richtung. Das Flächengebilde ist dadurch auch im eingefalteten Zustand seitlich abgedichtet, was das Auftreten von Strömungsbewegungen in demselben weitgehend ausschließt. Zur Verschiebung des Stellgitters in die zweite Position kann die vorgeschlagene Jalousie mit einer Verschiebeeinrichtung versehen werden, wobei diese zweckmäßig gegen die Kraft einer Rückstellfeder wirksam ist. Die Einstellung eines Öffnungsquerschnittes von ganz bestimmter Weite wird hierdurch stark vereinfacht. Sie kann gegebenenfalls auch automatisch erfolgen unter Verwendung an sich bekannter Verstelleinrichtungen.

Das Flächengebilde kann somit als Doppelflügel ausgebildet sein, der mit seiner vorderen Seite entgegen der anströmenden Luft gerichtet ist. Hierdurch erhält sowohl das Einzelelement als auch die gesamte Einrichtung eine besonders große Widerstandsfähigkeit gegenüber dem Staudruck der Strömung. Die Anordnung ist so besser stabil und ein Klappern wird vermieden. Gleichzeitig aber ist die Neigung zur Verschmutzung äußerst gering, weil die Doppelflügel eine besonders strömungsgünstige Form aufweisen, auf der sich keine Schmutzteilchen ablagern können bzw. diese sehr leicht von der mit hoher Geschwindigkeit strömenden Luft abgetragen werden. Insbesondere wird eine Verschmutzung der Gleitflächen vermieden, weil diese durch den Doppelflügel in Strömungsrichtung abgeschirmt werden. Bei geschlossener Anordnung liegen die einzelnen Doppelflügel an ihren Berührungsflächen in Bereichen an, die unmittelbar vor dem Schließvorgang mit einer besonders hohen Strömungsgeschwindigkeit von der Luft beaufschlagt werden, so daß hier besonders saubere Oberflächen vorliegen, was für eine gleichmäßige Anlage d.h. für eine gute Dichtheit zwischen den Doppelflügeln günstig ist.

Die Doppelflügel können im geschlossenen Zustand der Jalousie auch federnd aneinander anliegen, so daß auch unter Berücksichtigung der unvermeidbaren Fertigungstoleranzen eine ausgezeichnete Dichtheit gegenüber der anströmenden Luft erreicht wird. Der Gegenstand der vorliegenden Erfindung wird nachfolgend anhand der als Anlage beigefügten Zeichnung weiter erläutert. Es zeigen:

Figur 1 die frontale Gesamtansicht einer beispielhaften Ausführung der Jalousie in geöffnetem Zustand,

Figur 2 einen Schnitt durch die Jalousie nach Figur 1 mit einem beispielhaften pneumatischen Stellorgan,

Figur 3 einen Teilschnitt durch die Jalousie nach Figur 2 im geschlossenen Zustand,

Figur 4 eine perspektivische Darstellung eines ausgeschnittenen Bereichs der Jalousie, in der insbesondere Antriebsmechanismus für das Schiebegitter und damit für die Doppelflügel zu erkennen ist,

Figur 5 einen Teilschnitt durch die Jalousie nach Figur 2 im geschlossenen Zustand, wobei der Doppelflügel die Form eines Tragflügels aufweist.

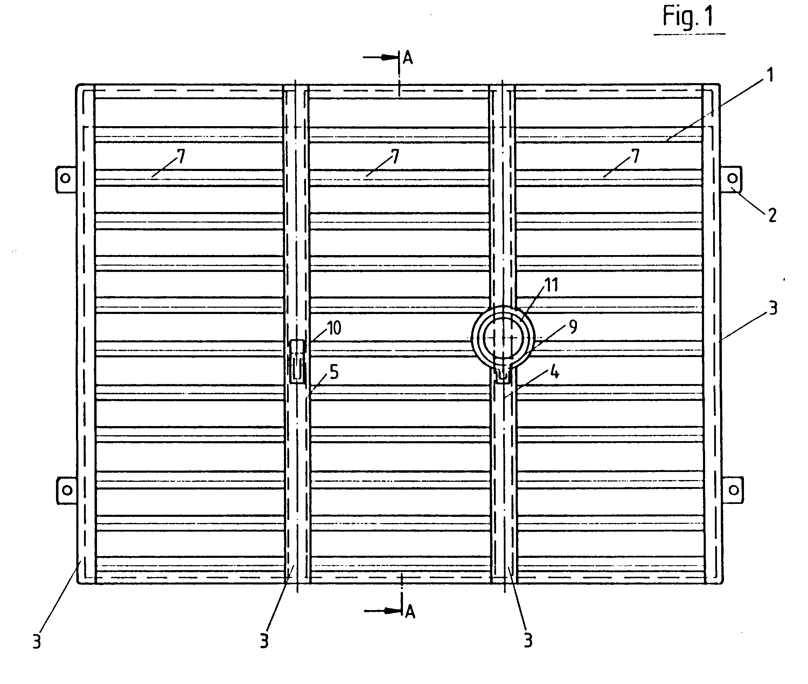

In Figur 1 wird die Vorderansicht der beispielhaften Ausführung der erfindungsgemäßen Jalousie im geöffneten Zustand gezeigt. Dabei bezeichnet 1 das fest mit dem Fahrzeugrahmen über Befestigungsnasen 2 zu verschraubende, ortsfeste Stützgitter 1, das seitlich und im mittleren Bereich Führungsleisten 3 aufweist, die dem Stützgitter 1 zugleich eine gute Biegesteifigkeit verleihen. Das Stützgitter 1 deckt das in Figur 1 nicht erkennbare Stellgitter 4 ab und ist mit ihm durch die eingefalteten Flächengebilde 7 verbunden. Diese haben in der eingefalteten Form die Gestalt keilförmiger Doppelflügel.

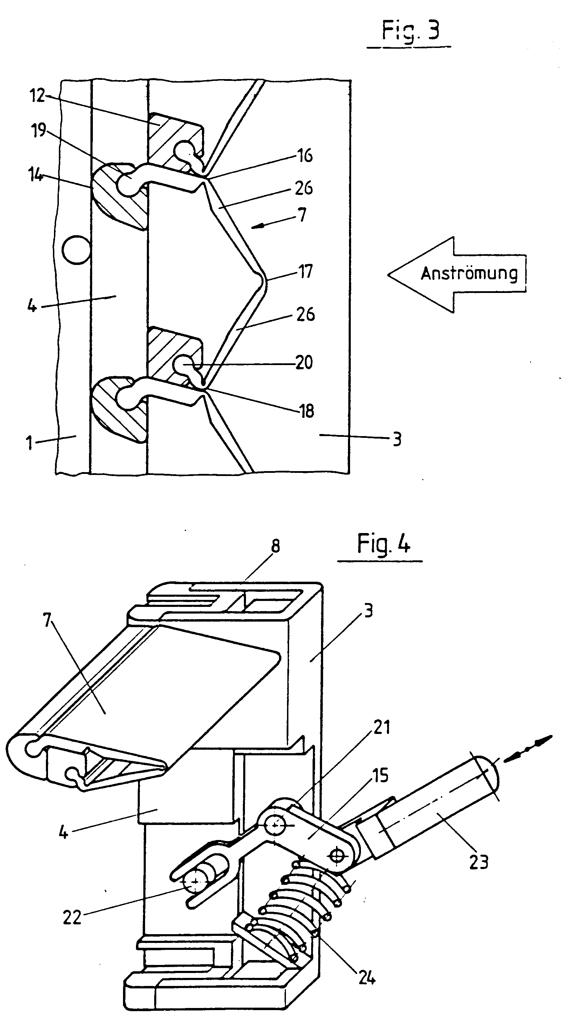

Sie sind siehe auch Fig.3 an den den Gitterstäben 12, 14 zugewandten Enden mit sich parallel zu ihrer Längsrichtung erstreckenden, wulstartigen Verdickungen 19, 20 versehen, die von entsprechend geformten Nuten der Gitterstäben 12, 14 umschlossen sind und durch diese formschlüssig gehalten werden. In Ausfaltrichtung werden die Flächengebilde beiderseits durch die mit dem Stützgitter 1 verbundenen Führungsleisten 3 geführt. Diese haben einen dementsprechend geringen, seitlichen Abstand von den Stirnseiten der einzelnen Flächengebilde, wodurch der von den Flächengebilden im eingefalteten Zustand umschlossene Hohlraum nicht durchströmbar und dadurch in hervorragender Weise vor der Einlagerung von Schwebstoffen geschützt ist. Eine gute Relativbeweglichkeit des Stellgitters 4 auf dem Stützgitter 1 ist dadurch auch unter erschwerten Bedingungen langfristig gesichert.

Bei der Ausführung gemäß Figur 1 sind vier der vorstehend angesprochenen Führungsleisten 3 über die Gesamtbreite der Jalousie verteilt. Die einzelnen Flächengebilde 7 haben eine dementsprechend reduzierte Länge, was ihnen eine größere mechanische Widerstandsfähigkeit und insbesondere Biegesteifigkeit verleiht. Die Funktionssicherheit der Jalousie im langfristigen Gebrauch ist dadurch deutlich erhöht.

Die mittleren beiden der gezeigten Führungsleisten 3 tragen zugleich Halterungen, auf denen die Verschiebeeinrichtungen 11 befestigt sind. Die feststehenden Teile der Verschiebeeinrichtungen können in Hinblick auf eine vereinfachte Herstellbarkeit auch einen einstückigen Bestandteil der Halterungen bilden. Die Verschiebeeinrichtungen werden gemeinsam betätigt, wodurch sich, bezogen auf die Gesamtbreite der Jalousie, eine relativ verminderte, spezifische Belastung der einzelnen Flächengebilde 7 ergibt. Diese können daher bei guter mechanischer Widerstandsfähigkeit relativ leicht ausgebildet sein.

Die angesprochene, in der Mitte angeordneten Führungsleisten 3 enthalten zwei Fenster 9 und 10, durch welche das Antriebsgestänge der Verschiebeeinrichtung 11 hindurchgeführt und mit dem Stellgitter 4 verbunden ist. Diesbezügliche Einzelheiten werden nachfolgend erläutert.

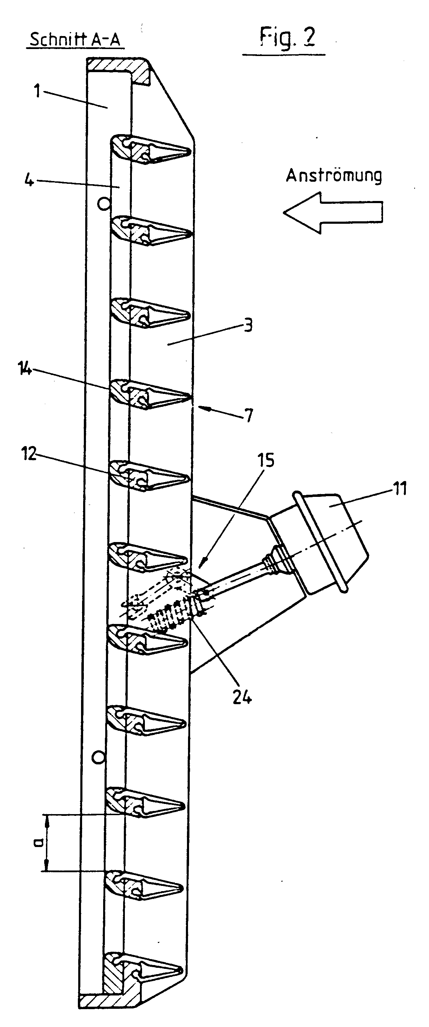

Figur 2 zeigt die Jalousie gemäß Figur 1 in einer entlang der Ebene A-A quergeschnittenen Darstellung. Zu erkennen ist das Stützgitter 1 mit einer Führungsleiste 3 und den dazugehörigen Gitterstäben 12 sowie das Stellgitter 4 mit den zugehörigen Gitterstäben 14. Jedes der beiden Gitter ist einteilig ausgebildet und besteht aus Polypropylen. Die gegenseitigen Abstände benachbarter Gitterstäbe stimmen miteinander vollkommen überein, wobei die Dimensionierung im einzelnen so vorgenommen ist, daß eine weitgehende gegenseitige Überdeckung entsprechend der in Figur 2 gezeigten Darstellung möglich ist.

Die Gitterstäbe 12 des Stützgitters 1 und die Gitterstäbe 14 des Stellgitters 4 sind durch die einzelnen Flächengebilde 7 verbunden, welche in der gezeigten Darstellung eingefaltet sind und quer zu Einströmrichtung eine Breite haben, die die Breite der Gitterstäbe 14 des Stellgitters 4 nicht in nennenswertem Maße überschreitet. Der Öffnungsquerschnitt der Jalousie erreicht daher in der ersten Position der Flächengebilde 7 seine größte Weite.

Durch die Betätigung der Verschiebeeinrichtung 11 läßt sich das Stellgitter 4 einschließlich der einstückig mit ihm ausgebildeten Gitterstäbe 14 relativ zu den Gitterstäben 12 des Stützgitters 1 um maximal das Maß a verlagern, wobei ein rückwärtiges Ausweichen durch die ortsfest in dem Stützgitter 1 befindlichen Führungsbolzen 13 verhindert wird und wobei seine Gitterstäbe 14 in den Bereich der ursprünglich benachbarten Gitterstäbe 12 des Stützgitters 1 verlagert werden.

Jedes zunächst eingefaltete Flächengebilde 7 wird dabei unter Überdeckung der ursprünglich vorhandenen Gitteröffnungen ausgefaltet und gelangt schließlich mit seinem an den Gitterstäben 14 des Stellgitters 4 festgelegten Ende in dichtenden Kontakt zu den ursprünglich benachbarten Gitterstäben 12 des Stützgitters 1. Die Kühlerjalousie ist in dieser Stellung vollständig geschlossen und in keiner Weise von der anströmenden Luft durchströmbar. Zwischenstellungen jeder beliebigen Weite lassen sich ohne weiteres erreichen.

Figur 3 zeigt einen Ausschnitt aus der Jalousie gemäß Figur 3 im geschlossenen Zustand. Durch die Relativverlagerung des Stellgitters 4 auf dem Stützgitter 1 haben sich die Flächengebilde 7 von einer spitzen Keilform (Figur 2) in eine stumpfe Keilform verändert, wobei die gegenseitige Zuordnung der verdickt ausgebildeten Versteifungszonen 26 eine Veränderung erfährt. Diese sind untereinander durch Gelenke 16, 17, 18 verbunden, welche als Filmscharniere ausgebildet sind und einen einstückigen Bestandteil eines jeden Flächengebildes 7 bilden. Die Längskanten 19, 20 der Flächengebilde 7 sind wulstartig verdickt und in entsprechend profilierten Nuten der Gitterstäbe 12, 14 formschlüssig gelagert.

In Figur 4 ist zur Verdeutlichung des Aufbaus und der Funktion der Jalousie ein Ausschnitt derselben perspektivisch dargestellt. wobei insbesondere das Übertragungsgestänge 15 zwischen der Verschiebeeinrichtung und dem Stellgitter 4 zu erkennen ist. Die Verstellkraft kann dabei, wie in Figur 2 gezeigt, mit einem pneumatischen Stellorgan oder auch mit anderen gebräuchlichen Antrieben, wie einem Hubmagneten oder ähnlichem erfolgen. Auch kann zur Verstärkung der Verstellkraft in der Endphase des Verschließens bzw. in der Anfangsphase des Öffnens der bekannte Kniehebelmechanismus mit Hilfe des Übertragungsgestänges verwirklicht werden. Das Übertragungsgestänge 15 hat im vorliegenden Fall die Form eines Winkels.

Das Übertragungsgestänge 15 wird um eine Achse 21 gedreht, die mit der Führungsleiste 3 des Stützgitters 1 verbunden ist. Im Stellgitter 4 befindet sich eine weitere Achse 22, um die gabelförmig die vordere Seite des Übertragungsgestänges 15 geführt wird. Durch Drehen des Übertragungsgestänges 15 um die Achse 21 läßt sich das Stellgitter 4 in der Führungsnut 8 vertikal bewegen und damit die Kühlerjalousie öffnen und schließen.

Am Übertragungsgestänge 15 wirkt einerseits die Stellkraft über die Schubstange 23 sowie entgegengerichtet eine Rückstellfeder 24, die dafür sorgt, daß bei drucklosem, pneumatischem Stellglied oder stromlosem Hubmagneten die Jalousie geöffnet wird. Dadurch wird gewährleistet, daß bie Störungen in den Sensoren, in der Elektronik, Pneumatik oder Elektrik keine für das Kühlsystem oder den Motor schädlichen hohen Temperaturen im Motorraum des Kraftfahrzeuges auftreten können.

Neben der Stellkraft der Verschiebeeinrichtung 11 und der Rückstellkraft der Rückstellfeder 24 wirken die Biegekräfte der Filmscharniere 16, 17 und 18 des Flächengebildes 7 im Sinne einer Öffnung der Jalousie und zwar umso mehr, je weiter diese geschlossen wird. Eine entgegengesetzt gerichtete Kraft wird durch die auf die Jalousie unter normalen Betriebsbedingungen gerichtete Luftströmung erzeugt. Diese in Richtung "verschließend" wirkende Kraft ist umso größer, je mehr die Kühlerjalousie geschlossen ist.

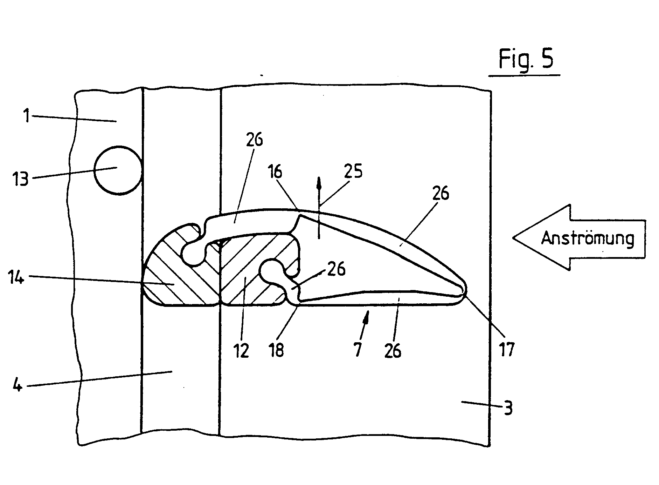

Ein weiteres Instrument zur Beeinflussung der auf die Jalousie bzw. auf die einzelnen Flächengebilde 7 einwirkenden Kräfte läßt sich durch eine spezielle Ausbildung des Profils erhalten. Dieses kann beispielsweise so gestaltet werden, daß das Flächengebilde einschließlich der es tragenden Gitterstäbe 12, 14 bei geöffneter Jalousie eine Außenkontur aufweist, die derjenigen der vom Flugzeugbau her bekannten Tragflügel angenähert ist (Figur 5).

Hierdurch werden unter der Wirkung der bei normaler Fahrt einströmenden Luft Auftriebskräfte 25 induziert, die in der Anfangsphase des Verschließens der Jalousie die Stellkraft unterstützen. Eine umgekehrte Funktion läßt sich durch eine entsprechende Profilgebung bei geschlossener Jalousie erreichen. Mit den dargestellten Merkmalen der Erfindung läßt sich somit jede beliebige Charakteristik der Jalousieverstellkraft mit Hilfe einer an das jeweilige Problem angepaßten, konstruktiven Optimierung erreichen.

**Patentansprüche**

1. Jalousie zur bedarfsweisen Verkleinerung einer durchströmbaren Öffnung, umfassend ein Stützgitter (1) und ein Stellgitter (4), die sich in jeweils gleichem Abstand a und parallel zueinander erstreckende Gitterstäbe (12, 14) aufweisen und parallel zueinander und quer zur Richtung der Gitterstäbe (12, 14) aus einer ersten Position relativ verschiebbar sind, wobei die Gitterstäbe (12, 14) des Stützgitters (1) und des Stellgitters (4) auf ihrer ganzen Länge durch ein in Richtung der Verschiebung in eine zweite Position ausfaltbares, im wesentlichen undurchlässiges Flächengebilde (7) verbunden sind, dadurch gekennzeichnet, daß das Stützgitter (1) und das Stellgitter (4) um etwa die Größe des Abstandes a in die zweite Position zum Verschließen der Öffnung relativ verschiebbar sind, daß die Gitterstäbe (12, 14) und daß das Flächengebilde (7) im ausgefalteten Zustand eine Breite aufweist, die wenigstens so groß ist wie der Abstand a benachbarter Gitterstäbe (12, 14).

2. Jalousie nach Anspruch 1, dadurch gekennzeichnet, daß das Flächengebilde (7) in seiner sich in Richtung der Gitterstäbe (12, 14) erstreckenden Längsrichtung ausgesteift ist.

3. Jalousie nach Anspruch 2, dadurch gekennzeichnet, daß das Flächengebilde (7) sich in Richtung seiner Breite erstreckende Versteifungszonen (26) aufweist und daß die Versteifungszonen (26) durch Gelenke (17) verbunden sind.

4. Jalousie nach Anspruch 3, dadurch gekennzeichnet, daß die Versteifungszonen (26) die ganze Breite des Flächengebildes (7) einnehmen mit Ausnahme nur eines Gelenkes (17) etwa in der Mitte und jeweils eines weiteren Gelenkes (16, 18) in der unmittelbaren Nähe der Gitterstäbe (12, 14).

5. Jalousie nach Anspruch 3 oder 4, dadurch gekennzeichnet, daß das Flächengebilde (7) einteilig aus polymerem Werkstoff besteht und daß die Gelenke (17) als Filmscharniere ausgebildet sind.

6. Jalousie nach Anspruch 4 oder 5, dadurch gekennzeichnet, daß das Flächengebilde (7) und die Gitterstäbe (12, 14) eine in der ersten Position gleichmäßig ineinander übergehende Außenkontur haben.

7. Jalousie nach Anspruch 6, dadurch gekennzeichnet, daß die Außenkonturen benachbarter Flächengebilde (7) und Gitterstäbe (12, 14) in der zweiten Position dichtend aneinander anlegbar sind.

8. Jalousie nach Anspruch 6 oder 7, dadurch gekennzeichnet, daß die Außenkontur in der ersten Position derjenigen eines an sich bekannten Tragflügels entspricht.

9. Jalousie nach Anspruch 1 oder 8, dadurch gekennzeichnet, daß das Stützgitter (1) und/oder das Stellgitter (4) mit sich in Richtung der Verschiebung erstreckenden Führungsleisten (3) versehen ist und daß die Führungsleisten (3) der seitlichen Begrenzung der Flächengebilde (7) eng benachbart sind.

10. Jalousie nach Anspruch 9, dadurch gekennzeichnet, daß die Führungsleisten (3) eine Erstreckung senkrecht zur Richtung des Stützgitters (1) haben, die wenigstens so groß ist wie die maximale Erstreckung des Flächengebildes (7) in gleicher Richtung.

11. Jalousie nach Anspruch 1 oder 10, dadurch gekennzeichnet, daß für die Verschiebung des Stellgitters (4) in die zweite Position eine Verschiebeeinrichtung (11) vorgesehen ist und daß die Verschiebeeinrichtung (11) gegen die Kraft einer Rückstellfeder (24) wirksam ist.

**Claims**

1. A grille for reducing, as required, the size of an orifice through which a flow can pass, comprising a supporting lattice (1) and an adjusting lattice (4) which each have lattice bars (12, 14) extending at an equal mutual separation a and parallel to one another and which are relatively displaceable parallel to one another and transversely to the direction of the lattice bars (12, 14) out of a first position, the lattice bars (12, 14) of the supporting lattice (1) and of the adjusting lattice (4) being connected over their entire length by means of an essentially impermeable surface structure (7) deployable in the direction of displacement into a second position, characterised in that the supporting lattice (1) and the adjusting lattice (4) are relatively displaceable by approximately the amount of the mutual separation a into the second position for the purpose of closing the orifice, in that the lattice bars (12, 14) at least partially overlap each other in the first position and in that the surface structure (7) has in the deployed state a width which is at least as large as the mutual separation a between adjacent lattice bars (12, 14).

2. A grille according to claim 1, characterised in that the surface structure (7) is stiffened in its longitudinal direction extending in the direction of the lattice bars (12, 14).

3. A grille according to claim 2, characterised in that the surface structure (7) has stiffening zones (26) extending in the direction of its width, and in that the stiffening zones (26) are connected by means of joints (17).

4. A grille according to claim 3, characterised in that the stiffening zones (26) take up the entire width of the surface structure (7), with the exception of only one joint (17) approximately in the middle and of a further joint (16, 18) in the immediate vicinity of the respective lattice bars (12, 14).

5. A grille according to claim 3 or 4, characterised in that the surface structure (7) is composed as one part from polymeric material, and in that the joints (17) are designed as film hinges.

6. A grille according to claim 4 or 5, characterised in that the surface structure (7) and the lattice bars (12, 14) have outer contours merging uniformly into one another in the first position.

7. A grille according to claim 6, characterised in that the outer contours of adjacent surface structures (7) and lattice bars (12, 14) can be laid sealingly against one another in the second position.

8. A grille according to claim 6 or 7, characterised in that, in the first position, the outer contour corresponds to that of an airfoil wing known per se.

9. A grille according to claim 1 or 8, characterised in that the supporting lattice (1) and/or the adjusting lattice (4) is equipped with guide strips (3) extending in the direction of displacement, and in that the guide strips (3) are closely adjacent to the lateral limitation of the surface structures (7).

10. A grille according to claim 9, characterised in that the guide strips (3) have an extension perpendicular to the direction of the supporting lattice (1) which is at least as large as the maximum extension of the surface structure (7) in the same direction.

**11.** A grille according to claim 1 or 10, characterised in that for displacing the adjusting lattice (4) into the second position there is a displacement device (11), and in that the displacement device (11) is effective counter to the force of a restoring spring (24).

**Revendications**

**1.** Jalousie pour la réduction, selon les besoins, d'une ouverture d'écoulement, comprenant une grille support (1) et une grille de commande (4), qui présentent des barres (12, 14) s'étendant, chaque fois espacées d'une distance égale (a), parallèlement entre elles, les grilles (1, 4) pouvant être translatées d'une première position, relativement entre elles et transversalement à la direction des barres (12, 14), lesdites barres (12, 14) de la grille de support (1) et de la grille de commande (4) étant reliées sur toute leur longueur par une surface composée (7), dans l'essentiel étanche, dépliable en direction de la translation dans une deuxième position, caractérisée en ce que la grille de support (1) et la grille de commande (4) pouvant être translatées relativement entre elles d'une distance environ égale à la distance (a) dans la deuxième position pour fermer l'ouverture, que les barres (12, 14) se recouvrent dans la première position au moins partiellement, et que la surface composée (7) présente dans l'état déplié une largeur qui est au moins égale à la distance (a) de barres voisines (12, 14).

**2.** Jalousie selon la revendication 1, caractérisée en ce que la surface composée (7) est renforcée dans sa direction longitudinale s'étendant en direction des barres (12, 14).

**3.** Jalousie selon la revendication 2, caractérisée en ce que la surface composée (7) présente des zones renforcées (26) qui s'étendent en direction de sa largeur et que les zones renforcées (26) sont reliées entre elles par des articulations.

**4.** Jalousie selon la revendication 3, caractérisée en ce que les zones renforcées (26) s'étendent sur toute la largeur de la surface composée (7), à l'exception d'une articulation (17) située approximativement au milieu, et d'une autre articulation (16, 18) située chaque fois à proximité immédiate des barres (12, 14).

**5.** Jalousie selon la revendication 3 ou 4, caractérisée en ce que la surface composée (7) est constituée en une seule pièce en matériaux polymères et que les articulations (17) sont exécutées sous forme d'une charnière à feuille mince.

**6.** Jalousie selon la revendication 4 ou 5, caractérisée en ce que la surface composée (7) et les barres (12, 14) ont dans la première position des profits extérieurs qui s'enchaînent de façon continue.

**7.** Jalousie selon la revendication 6, caractérisée en ce que les profits extérieurs de surfaces composées (7) voisines et les barres (12, 14) peuvent être jointes de façon étanche dans la position 2.

**8.** Jalousie selon la revendication 6 ou 7, caractérisée en ce que le profit extérieur dans la première position correspond au profit d'une aile en soi connue.

**9.** Jalousie selon la revendication 1 ou 8, caractérisée en ce que la grille support (1) et/ou la grille de commande (4) sont pourvues de barres de guidage (3) qui s'étendent en direction de la translation et que les barres de guidage (3) sont étroitement voisins de la délimitation latérale de la surface composée (7).

**10.** Jalousie selon la revendication 9, caractérisée en ce que les barres de guidage (3) ont une extension perpendiculaire à la direction de la grille support (1), qui est au moins égale à l'extension maximale de la surface composée (7) dans la même direction.

**11.** Jalousie selon la revendication 1 ou 10, caractérisée en ce qu'un dispositif de translation (11) est prévu pour la translation de la grille de commande (4) dans la deuxième position et que le dispositif de translation (11) travaille contre la force d'un ressort de rappel (24).

Fig. 1

EP 0 308 601 B1

Schnitt A-A       Fig. 2

1

4

Anströmung

3

14

7

12

15

11

24

a

## Fig. 3

Anströmung

## Fig. 4

Fig. 5

Anströmung